# EUROPÄISCHE PATENTSCHRIFT

(11) **EP 0 414 103 B1**
(45) Veröffentlichungstag und Bekanntmachung des Hinweises auf die Patenterteilung: **31.05.1995**
(21) Anmeldenummer: 90115567.1
(22) Anmeldetag: 14.08.1990
(51) Int. Cl.: C08F 246/00, C08F 224/00, C08F 226/06, C08F 228/06, C09D 157/04, C09J 157/04

(54) **Copolymerisate auf Basis olefinisch ungesättigter radikalisch ringöffnender Ketenderivate**
Copolymers based on olefinic unsaturated radical ring-opening ketene derivatives
Copolymères à base de dérivés de cétène oléfiniquement insaturés ouvrant le noyau par radicaux

(30) Priorität: 22.08.1989 DE 19893927619
(43) Veröffentlichungstag der Anmeldung: 27.02.1991
(73) Patentinhaber: BASF Aktiengesellschaft, D-67063 Ludwigshafen (DE)
(72) Erfinder: Rehmer, Gerd, Dr., D-6711 Beindersheim (DE); Auchter, Gerhard, Dr., D-6702 Bad Duerkheim (DE)

(56) Entgegenhaltungen:
- EP-0 095 182
- US-4 923 941
- US-4 906 714
- EP-0 076 581
- US-4 474 923
- MACROMOLECULES, Band 15, 1982, Seiten 711-714, American Chemical Society; W.J. BAILEY et al.: "Free radical ring-opening polymerization of 4,7-dimethyl-2-methylene-1,3-dioxepane and 5,6-benzo-2-methylene-1,3-dioxepane"
- DIE MAKROMOL. CHEMIE, Band 183, 1982, Seiten 1913-1920; W.J. BAILEY et al.: "Synthesis and free radical ring-opening polymerization of 2-methylene-4-phenyl-1,3-dioxolane"

## Beschreibung

Die Erfindung betrifft die Verwendung von Copolymerisaten, aufgebaut aus
A) 99,5 - 75 Gew.-% Heteroatome enthaltenden Monomeren ausgewählt aus 4 bis 21 C-Atome enthaltenden Monocarbonsäureestern und Vinylestern, bis zu 35 Gew.-% bezogen auf das Copolymerisat, (Meth)acrylamiden, Acrylnitril, Methacrylnitril, Diacetonacrylamid, Hydroxalkyl(meth)acrylaten, 2-Ketobutyl(meth)acrylat, N-Vinylpyrrolidon, N-Vinylformamid, N-Vinylcaprolactam, Tetrahydrofurfuryl-2-acrylat, Tetrahydrofurfuryl-2-methacrylat oder Tetrahydrofurfuryl-2-(meth)acrylamid,
   bis zu 10 Gew.-% monoolefinisch ungesättigte Mono- und oder Dicarbonsäuren und/oder deren Anhydriden
   und gegebenenfalls Acrolein, Methacrolein, Acetoacetoxyethylacrylat, Vinylmethylether, Vinylisobutylether, Vinylpyridin, *β*-Aminoethylvinylether, Aminopentylvinylether oder tert.-Butylaminoethylmethacrylat, sowie Ureido-Monomeren und N-(Meth)acryloylprolin oder N-Acryloyl- oder N-Methacryloylderivaten von Aminosäuren oder N-Acryloyl- und N-Methacryloylderivaten von Aminosäureamiden.
B) 0,5 bis 25 % ungesättigten Verbindungen der Formel I 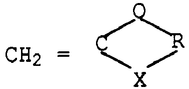 und
C) 0 bis 20 % weiteren olefinisch ungesättigten Monomeren, wobei
   X O, S oder NR¹ und
   R gegebenenfalls substituiertes C₂- bis C₆-Alkylen sind und
   R¹ C¹- bis C₈-Alkyl oder Phenyl bedeutet.

Bevorzugte Ausführungen der Erfindung finden sich in den Ansprüchen 2 bis 11.

Als Substituenten für die Alkylenreste R sind beispielsweise C₁- bis C₄-Alkyl oder C₁- bis C₄-Alkoxy, wie Methyl, Ethyl, Butyl, Methoxy oder Ethoxy zu nennen.

Verbindungen der Formel I, die radikalisch unter Ringöffnung polymerisieren, sind aus den Arbeiten von W.J. Bailey et al ¹⁻³⁾sowie aus der japanischen Patentanmeldung J6 0224-687-A bekannt.
¹⁾ J. Makromol. Sci.-Chem. A21 (8&9), pp. 979-995 (1984)
²⁾ J. Makromol. Sci.-Chem. A25 (1), pp. 27-40 (1987)
³⁾ Acta Polymerica 39 (1988), Nr. 7, S. 335-341

So sind u.a. Copolymerisate cyclischer Ketenacetale zur Herstellung von mit funktionellen Gruppen terminierten Oligomeren in der Literatur beschrieben, gleichfalls sind Copolymerisate von olefinisch ungesättigten Ketenaminoacetalen (Halbaminalen) bekannt: s. J. Makromol. Sci.-Chem., A21 (8&9), pp. 979-995 (1984).

Des weiteren ist die photochemisch initiierte ringöffnende Polymerisation von 2-Methyl-1,3-dioxepan beschrieben: s. J. Polym. Sci., Polym. Lett. Ed., 21 (5), 1983, 373-380.

Für die Herstellung der Copolymerisate werden insbesondere bis zu 20 Gew.-% und bevorzugt 1 bis 15 Gew.-%, bezogen auf das Gesamtgewicht der eingesetzten Monomeren, der olefinisch ungesättigten cyclischen ringöffnenden Monomeren der Formel I verwendet.

Insbesondere sind 2-Methylendioxepan-1,3, 2-Methylendioxolan-1,3, N-Methyl-2-methylenoxazolidin oder 2-Methylenthiolan-1,3 und vorzugsweise 2-Methylendioxepan-1,3 und N-Methyl-2-methylenoxazolidin zu nennen.

Diese Monomeren können für sich allein oder auch im Gemisch eingesetzt werden. Besonders bevorzugt sind Mischungen aus 2-Methylen-1,3-dioxepan und N-Methyl-2-methylenoxazolidin.

Als Heteroatome enthaltende Monomere sind z.B. monoolefinisch ungesättigte 4 bis 21 C-Atome enthaltende Monocarbonsäureester, insbesondere Ester der Acryl- und Methacrylsäure sowie Vinylester geeignet.

Acryl- und Methacrylsäureester von 1 bis 18 C-Atome enthaltenden Alkanolen sind z.B. Methylacrylat, Ethylacrylat, n-Butylacrylat und -methacrylat, Isobutylacrylat und -methacrylat, Isoamylacrylat und -methacrylat, 2-Ethylhexylacrylat und -methacrylat, Isooctylacrylat und -methacrylat, Propylacrylat und Isopropylacrylat, Methylmethacrylat, Decylacrylat und -methacrylat oder Dodecylacrylat und -methacrylat.

Als Vinylester kommt besonders Vinylpropionat in Betracht, geeignet sind ferner Vinylacetat, Vinylformiat und Vinylbutyrat. Ein Gehalt von 50 bis 95,5 Gew.-% an einpolymerisierten Estern der Acryl- und/oder

Methacrylsäure von 2 bis 8 C-Atome enthaltenden Alkanolen ist von besonderem Interesse.

(Meth)acrylester, die sich von Alkanolen mit 1 bis 3 Kohlenstoffatomen sowie tert.-Butylalkohol ableiten, sind in den Copolymerisaten für Haftkleber in der Regel zu nicht mehr als 25 Gew.-% enthalten, bezogen auf die Menge aus A) und B).

Die Copolymerisate können auch weitere olefinisch ungesättigte Monomere in Mengen bis zu 35 Gew.-% einpolymerisiert enthalten. In Betracht kommen (Meth)acrylamide wie Acrylamid und Methacrylamid. Acrylnitril, Methacrylnitril, Diacetonacrylamid, Hydroxalkyl(meth)acrylate wie 2-Hydroxyethyl(meth)acrylat und 4-Hydroxybutyl(meth)acrylat, des weiteren Monomere wie 2-Ketobutyl(meth)acrylat, N-Vinylpyrrolidon, N-Vinylformamid, N-Vinylcaprolactam, Tetrahydrofurfuryl-2-acrylat, Tetrahydrofurfuryl-2-methacrylat oder Tetrahydrofurfuryl-2-(meth)acrylamid.

Weitere Monomere, die für die Herstellung der Copolymerisate mitverwendet werden können sind: Acrolein, Methacrolein, Acetoacetoxyethylacrylat, Vinylmethylether, Vinylisobutylether, Vinylpyridin, *β*-Aminoethylvinylether, Aminopentylvinylether oder tert.-Butylaminoethylmethacrlyat, sowie Ureido-Monomere, wie sie z.B. aus den US-PS' en 2 881 155, 3 300 429 und 3 356 627 bekannt sind; z.B. *β*-Ureidoethylacrylat, *β*-Ureidoethylvinylether, N-Dimethylaminoethyl-N'-vinyl-N,N'-ethylenharnstoff und N-Methacrylamidomethyl-N,N'-ethylenharnstoff.

In Mengen bis zu 10, insbesondere bis zu 6 Gew.-% können auch monoolefinisch ungesättigte Mono- und/oder Dicarbonsäuren und/oder deren Anhydride verwendet werden, z.B. (Meth)acrylsäure, Maleinsäure, Fumarsäure, Maleinsäureanhydrid, Itaconsäureanhydrid oder Citraconsäureanhydrid. Bevorzugt sind Acrylsäure und Methacrylsäure.

Weitere geeignete carboxylgruppentragende Monomere sind die Maleinsäure-, Fumarsäure- und Itaconsäuremonoester von Alkanolen, die 1 bis 24 C-Atome enthalten, wobei die Einführung der Estergruppe in die Copolymerisate auch durch Umsetzung copolymerisierten Maleinsäureanhydrids mit den entsprechenden Alkanolen erreicht werden kann.

Saure Monomere sind auch die Halbamide von 1 bis 12 C-Atome enthaltenden aliphatischen, cycloaliphatischen und/oder aromatischen Aminen der genannten Dicarbonsäuren.

Ferner sind noch Monomere wie N-(Meth)acryloylprolin oder N-Acryloyl- oder N-Methacryloylderivate von Aminosäuren wie Glycin, Alanin, 6-Aminohexansäure oder N-Acryloyl- und N-Methacryloylderivate von Aminosäureamiden wie Glycinamid, Alaninamid, z.B. N-Acryloylalanin zu nennen. Derartige Monomere sind z.B. aus der US-PS 29 05 049 bekannt.

Als weitere Comonomere C), die in Mengen bis zu 20 Gew.-% verwendet werden können, sind u.a. Vinylaromaten wie Styrol, Vinyltoluol und *α*-Methylstyrol sowie Ethylen, Propylen, Buten, Isobuten, Butadien oder Isopren brauchbar.

Die Copolymerisate haben im allgemeinen eine Glasübergangstemperatur, gemessen mittels Differentialthermoanalyse, von unter 0 ° C, bevorzugt von unter -20 ° C, besonders bevorzugt von unter -30 ° C und einen K-Wert von 15 bis 120, bevorzugt von 30 bis 80, ganz besonders bevorzugt von 35 bis 65.

Die Copolymerisate können nach bekannten Verfahren der Lösungs-, Emulsions- und Suspensionspolymerisation und nach Verfahren zur Herstellung von Sekundärdispersionen hergestellt sein; derartige Verfahren sind z.B. aus den DE-OS' en 35 43 361 und 37 20 850 bekannt.

Übliche Verfahren für die Emulsionscopolymerisation sind z.B. in den US-PS' en 2 754 280 und 2 795 564 sowie in der EP-PS 00 37 923 beschrieben. So können die Monomeren z.B. mit einem anionischen, einem kationischen oder einem nicht-ionischen Dispergiermittel emulgiert werden, wobei in der Regel etwa 0,05 bis 10 Gew.-%, bezogen auf das Gesamtgewicht der Monomeren, dieser Dispergiermittel verwendet werden.

Die Emulsionscopolymerisate können durch Stufen-, Gradienten-, Batch- und übliche Zulaufverfahren sowie durch kontinuierliche Reaktionsführung und Verfahren zur Herstellung von Sekundärdispersionen wie sie z.B. aus den DE-OS' en 35 43 361 oder 37 12 860 bekannt sind, hergestellt werden.

Diese Verfahren schließen die Stufen-, Gradienten- und üblichen Zulaufverfahren von Monomeren- und/oder Initiator(systemen) ein; Emulsionspolymerisationsverfahren sind z.B. bei H. Bartl und J. Falbe, "Houben-Weyl, Methoden der organischen Chemie, Makromolekulare Stoffe", Bd. E20, Teil 1 und 2, Georg-Thieme-Verlag, Stuttgart, New York, 1987, sowie in der im Teilband 3 angegebenen Literatur beschrieben. Geeignete Dispergiermittel sind z.B. im Houben-Weyl, Bd. E20, Teil 1 und 2, Thieme, Stuttgart (1987) und in dem Buch von Stache, "Tensidtaschenbuch", 2. Ausgabe, Carl-Hanser-Verlag, München, Wien, 1981 aufgeführt.

Bevorzugt als Polymerisationsverfahren ist die Polymerisation in organischen Lösungsmitteln.

Die Copolymerisate werden bei Temperaturen von 20 bis 150 ° C, vorzugsweise von 80 bis 120 ° C, in Gegenwart von 0,25 bis 10 Gew.-% , bezogen auf die Monomeren, an Peroxiden oder Azostartern als Polymerisationsinitiatoren und in Gegenwart von 0 bis 200 Gew.-%, bevorzugt 5 bis 100 Gew.-%, bezogen auf die Monomeren, an indifferenten Lösungsmitteln, durch Substanz- oder aber bevorzugt durch Lösungspolymerisation hergestellt.

Als Lösungsmittel werden vorzugsweise solche vom Siedebereich 50 bis 150 ° C verwendet, die daneben noch kleine Anteile höher- oder niedrigsiedender Komponenten enthalten können. Geeignet sind z.B. Kohlenwasserstoffe wie Benzol, Toluol, o-, m- und p-Xylol und Benzine, die vorzugsweise einen Siedebereich von 60 bis 120 ° C haben.

Bevorzugt sind Toluol und Essigsäureethyl- oder -butylester und ferner Ketone wie Aceton oder Methylethylketon sowie Gemische aus diesen.

Für die Durchführung der Polymerisation können dem Reaktionsgemisch auch den Polymerisationsgrad senkende Verbindungen, sogenannte Polymerisationsregler zugesetzt werden.

Die Polymerisationsverfahren sind in der Literatur vielfach beschrieben und bieten demgegenüber keine Besonderheiten.

Sofern man jedoch zur Herstellung der Copolymerisate bei der Lösungspolymerisation Säuren wie Acrylsäure, Methacrylsäure, Vinylsulfonsäure oder andere mitverwendet, werden die cyclischen Monomeren der Formel I als separater Zulauf, ggf. gelöst in den Comonomeren wie iso-Amylacrylat oder 2-Ethylhexylacrylat der Reaktionsmischung zugeführt. Es ist oftmals auch von Vorteil, den Monomeren vor der Zugabe der Monomeren der Formel I geringe Mengen eines Orthoesters, z.B. Orthoameisensäureethylester, in Mengen bis zu 2 Gew.-%, bezogen auf die Monomeren, zuzusetzen. Insbesondere ist es wichtig auf Wasserfreiheit zu achten und gegebenenfalls die Einsatzstoffe vorher zu trocknen.

Die Copolymerisate eignen sich als Haftklebemittel, die in lösemittelfreier Form, z.B. als Schmelzen oder in gelöster Form, z.B. als organische Lösemittel enthaltende Polymerlösungen, zum Beschichten von flächigen Substraten oder Formkörpern aus Metall, Kunststoff, Papier, Pappe, Leder oder anorganischen Materialien verwendet werden können. Sie haben hervorragendes Auffließ- und Benetzungsverhalten auf den unterschiedlichsten Substraten.

Die Copolymerisate dienen zur Herstellung haftklebrig ausgerüsteter Artikel, wie Haftklebeetiketten, Haftklebebändern oder medizinischen Klebebändern oder zur Herstellung haftklebrig ausgerüsteter Zwischenprodukte wie haftklebrigen Schichten für die Beflockung.

Sie zeichen sich - besonders auch in der Wärme - durch hohen Rolling ball Tack und hohe Scherstandfestigkeit aus, wodurch eine der Hauptanforderungen an Klebstoffe gelöst wird.

Eine wichtige Eigenschaft der Copolymerisate ist in diesem Zusammenhang ihre Glasübergangstemperatur "Tg", so daß infolgedessen die Auswahl der Monomeren und deren Mengenanteile von Einfluß auf die Tg sind. Die Tg der Polymeren für Haftkleber sollten unter 0 ° C liegen (d.h., das Polymere muß einen weichen Überzug geben), vorzugsweise soll die Tg unter -10 ° C liegen.

Die Tg ist ein übliches Maß für die Charakterisierung der Härte eines Polymeren und Angaben darüber befinden sich in dem Buch von Flory, "Principles of Polymer Chemistry", Seiten 56 und 57 (1953) Cornell University Press. Glastemperaturen sind auch in dem Nachschlagwerk von Brandrup und Immergut, "Polymer Handbook", Sec. III, Seiten 61-63, Interscience 1966 angegeben.

Es ist zwar vorzuziehen, die Tg eines Polymeren zu bestimmen, jedoch kann diese auch nach der Veröffentlichung von Fox, Bull. Am. Physics, Soc. 1, 3, Seite 123 (1956) berechnet werden.

Zweckmäßigerweise liegt die Tg der Copolymerisate zwischen 0 bis -40 ° C, vorzugsweise zwischen -10 bis -30 ° C. Sie kann durch die Wahl der Monomeren weitgehend beliebig eingestellt werden, die Kriterien dafür sind im Prinzip bekannt.

Ebenfalls bekannt ist, daß die Haftklebereigenschaften des Copolymerisats durch Vernetzung modifiziert werden können. Beispielsweise sind in den Schutzrechten DE-OS 26 49 544, DE-OS 33 25 898 oder DE-OS 25 26 747 entsprechende Vernetzungsmethoden beschrieben.

Bei Einkomponentenklebern findet die Vernetzung nach dem Auftrag des Klebstoffs statt, bei Zweikomponentenprodukten wird die Vernetzung durch die Zugabe der zweiten Komponente ausgelöst.

Die vernetzten Copolymerisate zeichnen sich durch hohe Scherstandfestigkeit ihrer Verklebungen bei gleichzeitig hohem rolling ball tack aus.

Die neuen Haftklebemittel lassen sich zudem leicht durch die Wahl der Monomerzusammensetzung und der Wahl des Vernetzungssystems in ihren Eigenschaften den geforderten Anwendungsfällen anpassen. So können leicht Etiketten mit einer Haftkleberschicht hergestellt werden, die sich rückstandsfrei von verschiedenen Substraten abziehen lassen (wiederabziehbare Etiketten, wiederabziehbare Klebebänder), ferner kann man auch doppelseitige Klebebänder, Elektroisolierbänder und selbstklebende Dekorfolien herstellen.

Die neuen Haftklebemittel können in an sich üblicher Weise modifiziert und/oder konfektioniert werden. Dafür können die üblichen klebrigmachenden Harze (Tackifier), z.B. Kohlenwasserstoffharze, gegebenenfalls modifizierte Kolophoniumharze, *β*-Pinen-Harze, Polyterpen-Harze, metallionenenthaltende (modifizierte) Kolophoniumharze wie Zink-Resinate, Terpenphenolharze, Ketonharze, Aldehydharze, Cumaron-Indenharze, (Di)cyclopentadienharze, die den Copolymerisaten in Mengen von bis zu 50 Gew.-% zugesetzt werden können verwendet werden. Ferner kommen Homopolymerisate wie Poly(2-ethylhexylacrylat) oder Poly(n-butylacrylat), Weichmacher, z.B. auf Basis von Mono-, Di- oder Polyesterverbindungen, polychlorierten Kohlenwasserstoffen oder Paraffinölen, Farbstoffe, Pigmente, Stabilisatoren, kautschukelastische Stoffe, wie Natur- oder Synthesekautschuke oder Styrol-Butadien-Co-Polymere, Polyvinylether oder Polybutadienöle, die in geringen Mengen zugesetzt werden können als Zusätze in Betracht. Zur Modifizierung sind ferner Polyamide und Polyester geeignet.

### Anwendungstechnische Prüfung als Haftkleber

Für die Durchführung der Klebeprüfungen werden auf einem Streichtisch Polyethylenglykolterephthalatfolien (z.B. Hostaphan® RN 36, Hoechst AG) bei Raumtemperatur mit den Haftklebemitteln derart beschichtet, daß sich ein Auftragsgewicht von 25 g/m² ergibt. Das Lösemittel wird bei 90 ° C und 1 bar Druck abgedampft.

So hergestellte Folien werden in 2 cm breite Streifen geschnitten und diese Streifen mit der Haftklebeschicht auf eine verchromte Messingplatte aufgebracht. Die Platte wird dann mit den Streifen 24 h bei 23 ° C und 65 % rel. Luftfeuchtigkeit gelagert.

Bei der Messung der Scherstandfestigkeit wird eine verklebte Fläche von 20 x 25 mm zugrundegelegt, die Platte senkrecht eingespannt und der überhängende Teil des Klebestreifens mit einem Gewicht von 1 kg bzw. 2 kg belastet. Es wird die Zeit bestimmt, bis sich die Verklebung löst. Die Messung wird bei 23 ° C und 50 ° C durchgeführt. Alle Messungen werden 5fach gemacht.

Der Kugelroll-Tack (rolling ball tack) wird nach PSTC-6 (Pressure-Sensitive Council's Test Method No. 6) durchgeführt: Eine Stahlkugel von 1,1 cm Durchmesser rollt von einer schiefen Ebene mit halbkreisförmigen Innenfläche und einem Neigungswinkel von 21 ° 30' auf die Klebstoffschicht des Prüfstreifens. Die zurückgelegte Strecke bis zum Stillstand der Kugel gilt als Maß für den Tack. Je größer die Distanz ist, die die Kugel zurücklegt, desto geringer ist der Kugelroll-Tack. Für die Prüfung werden Klebestreifen mit einem gleichmäßigen Klebstoffauftrag von 25 g/m² verwendet. Es werden jeweils sieben Messungen durchgeführt, wobei der kleinste und größte Wert verworfen und der Mittelwert aus den verbleibenden fünf Werten gebildet wird.

Die in den folgenden Beispielen angegebenen Teile und Prozente beziehen sich auf das Gewicht. Die Bestimmung der K-Werte erfolgt nach DIN 53 726 in 1 %iger Lösung in Tetrahydrofuran bei 25 ° C.

### Beispiel 1

Eine Mischung von 150 g Essigsäureethylester und 138 g einer Monomerenmischung aus 800 g n-Butylacrylat, 100 g Methylacrylat und 30 g Acrylsäure sowie 10 g von insgesamt 70 g 2-Methylen-1,3-dioxepan wird zusammen mit 3 g tert.-Butyl-per-2-ethylhexanoat auf 75 bis 80 ° C erwärmt und 15 Minuten anpolymerisiert. Anschließend gibt man im Verlauf von 3 Stunden die restlichen Monomeren (das 2-Methylen-1,3-dioxepan per getrenntem Zulauf) und gleichzeitig im Verlauf von 4 Stunden eine Lösung von 5 g tert.-Butyl-per-2-ethylhexanoat in 136 g Essigsäureethylester hinzu. Nach beendeter Initiatorzugabe rührt man noch 4 Stunden bei 75 bis 85 ° C nach.

Man erhält ein Copolymerisat vom K-Wert 50.

Man stellt mit Isopropanol auf einen Feststoffgehalt von 45 Gew.-% ein und bereitet die folgenden Mischungen mit Titan(IV)-acetylacetonat als Vernetzer:

| Beispiel | Titan(IV)-acetylacetonat |
|---|---|
| 1.1 | 1,0 Gew.-%, bezogen auf den Feststoffgehalt |
| 1.2 | 1,5 Gew.-%, bezogen auf den Feststoffgehalt |
| 1.3 | 2,0 Gew.-%, bezogen auf den Feststoffgehalt |

### Beispiel 2

Analog zu der oben angegebenen Vorschrift stellt man ein Copolymerisat aus den folgenden Monomeren her:
800 g iso-Amylacrylat, 20 g Diacetonacrylamid, 20 g Acrylsäure, 100 g 2-Methylen-1,3-dioxepan und 60 g Methylacrylat unter Verwendung von Dimethyl-2,2'-azobisisobutyrat. Das Copolymerisat hat einen K-Wert von 62. Die erhaltene Copolymerisatlösung wird mit Aceton auf einen Feststoffgehalt von 40 Gew.-% eingestellt. Teile dieser Lösung werden mit einer 40 %igen Toluol und Xylol im Verhältnis 5:1 enthaltenden Lösung von 2-Stearylmalonsäuredi(4-methyl-pent-2-yliden)hydrazid verrührt:

| Beispiel | Hydrazid |
|---|---|
| 2.1 | 0,5 Gew.-%, bezogen auf den Feststoffgehalt |

### Beispiel 3 (Vergleichsbeispiel)

Durch Polymerisation von 500 g 2-Ethylhexylacrylat, 310 g n-Butylacrylat, 170 g Methylacrylat, 20 g Acrylsäure wird ein Copolymerisat vom K-Wert 54,5 hergestellt.

Gleiche Teile der mit Isopropanol auf 45 Gew.-% verdünnten Copolymerisatlösung werden mit den folgenden Teilen Titan(IV)-acetylacetonatlösung versetzt:

| Beispiel | Titan(IV)-acetylacetonat |
|---|---|
| 3.1 | 0,5 |
| 3.2 | 1,0 |

### Beispiel 4

Gemäß DE-OS 2 134 688 (Beispiel 1) wird ein Copolymerisat aus 87,2 Teilen 2-Ethylhexylacrylat, 2,8 Teilen Acrylsäure und zusätzlich 10 Teilen 2-methyl-1,3-dioxepan hergestellt und wie dort angegeben mit einem mit n-Butanol veretherten Melamin-Formaldehydharz versetzt.

### Beispiel 5 (Vergleichsbeispiel)

Gemäß DE-OS 2 134 688 (Beispiel 1) wird ein Copolymerisat aus 97,2 Teilen 2-Ethylhexylacrylat und 2,8 Teilen Acrylsäure hergestellt und wie dort angegeben mit einem mit n-Butanol veretherten Melamin-Formaldehydharz versetzt.

### Beispiel 6

Ein Copolymerisat der Zusammensetzung
78 Teile Isoamylacrylat
18 Teile 2-Methylen-1,3-dioxepan
2 Teile N-Methyl-2-methylenoxazolidin und
2 Teilen 1,4-Butandiolmonoacrylat
mit dem K-Wert 45 wird als 50 gew.-%ige toluolische Lösung mit Isophorondiisocyanat und Dibutylzinndilaurat (Katalysator) versetzt. Nach dem Trocknen der beschichteten Prüffolien bei 120 ° C erhält man eine haftklebrige Beschichtung mit einem Rolling-Ball-Tack von 7,5 cm.

**Tabelle 1**

| Ergebnisse der anwendungstechnischen Prüfung als Haftkleber | | | |
|---|---|---|---|
| Beispiel | Scherstandfestigkeit in Stunden | | Rolling-Ball-Tack in cm |
| | mit 2 kg bei 23 ° C | mit 1 kg bei 50 ° C | |
| 1.1 | 9,5 | >24 | 2,4 |
| 1.2 | >48 | >48 | 3,2 |
| 1.3 | >48 | >48 | 5,4 |
| 2.1 | 5,0 | >24 | 2,8 |
| 3.1 | 2,3 | 6 | 10,6 |
| 3.2 | >24 | >24 | >20 |
| 4 | nicht gemessen | >10 | 4,5 |
| 5 | nicht gemessen | >10 | 6,5 |

Die Beispiele 1.1 bis 1.3, 2.1 und das Beispiel 4 zeigen die überraschenden Eigenschaften der erfindungsgemäßen Haftklebemittel.

## Patentansprüche

1. Verwendung von Copolymerisaten, aufgebaut aus
A) 99,5 - 75 Gew.-% Heteroatome enthaltenden Monomeren ausgewählt aus 4 bis 21 C-Atome enthaltenden Monocarbonsäureestern und Vinylestern, bis zu 35 Gew.-% bezogen auf das Copolymerisat, (Meth)acrylamiden, Acrylnitril, Methacrylnitril, Diacetonacrylamid, Hydroxalkyl(meth)-acrylaten, 2-Ketobutyl(meth)acrylat, N-Vinylpyrrolidon, N-Vinylformamid, N-Vinylcaprolactam, Tetrahydrofurfuryl-2-acrylat, Tetrahydrofurfuryl-2-methacrylat oder Tetrahydrofurfuryl-2-(meth)acrylamid, bis zu 10 Gew.-% monoolefinisch ungesättigte Mono- und oder Dicarbonsäuren und/oder deren Anhydriden
und gegebenenfalls Acrolein, Methacrolein, Acetoacetoxyethylacrylat, Vinylmethylether, Vinylisobutylether, Vinylpyridin, *β*-Aminoethylvinylether, Aminopentylvinylether oder tert.-Butylaminoethylmethacrylat, sowie Ureido-Monomeren und N-(Meth)acryloylprolin oder N-Acryloyl- oder N-Methacryloylderivaten von Aminosäuren oder N-Acryloyl- und N-Methacryloylderivaten von Aminosäureamiden.
B) 0,5 bis 25 % ungesättigten Verbindungen der Formel I 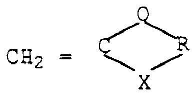 und
C) 0 bis 20 % weiteren olefinisch ungesättigten Monomeren, wobei
X O, S oder NR¹ und
R gegebenenfalls substituiertes C₂- bis C₆-Alkylen sind und
R¹ C¹- bis C₈-Alkyl oder Phenyl bedeutet.
als Haftklebemittel.

2. Verwendung von Copolymerisaten nach Anspruch 1, wobei die Copolymerisate als Komponenten A) Acryl- und/oder Methacrylsäureester von Alkanolen mit 1 bis 18 C-Atomen enthalten.

3. Verwendung von Copolymerisaten nach Anspruch 1, wobei die Copolymerisate als Komponenten A) Acrylsäureester von nicht tertitären C₄- bis C₁₂-Alkanolen enthalten.

4. Verwendung von Copolymerisaten nach Anspruch 1, wobei die Copolymerisate als Komponenten A) neben Acryl- und/oder Methacrylsäureestern noch carboxylgruppenhaltige ungesättigte Verbindungen enthalten.

5. Verwendung von Copolymerisaten nach Anspruch 4, wobei die Copolymerisate als carboxylgruppenhaltige Verbindungen Acrylsäure, Methacrylsäure, Maleinsäure, Fumarsäure oder Malein- oder Fumarsäuremonoester oder -amide enthalten.

6. Verwendung von Copolymerisaten nach Anspruch 1, wobei die Copolymerisate als Komponenten A) neben Acryl- und/oder Methacrylsäureestern noch N-Vinylpyrrolidon enthalten.

7. Verwendung von Copolymerisaten nach Anspruch 1, wobei die Copolymerisate als Komponente B) 2-Methylendioxepan-1.3 oder N-Methyl-2-methylenoxazolidin enthalten.

8. Verwendung von Copolymerisaten nach Anspruch 1, wobei die Copolymerisate als Komponente C) Styrol, Vinyltoluol, Ethen, Propen, Buten oder Butadien enthalten.

9. Verwendung von Copolymerisaten nach Anspruch 1, wobei die Copolymerisate nach üblichen Methoden vernetzt sind.

10. Verwendung von Copolymerisaten gemäß Anspruch 1, **dadurch gekennzeichnet, daß** man bei der Herstellung der Copolymerisate die Komponenten in Lösung umsetzt.

11. Verwendung nach Anspruch 10, **dadurch gekennzeichnet, daß** man in Abwesenheit von Wasser oder in Gegenwart wasserbindender Mittel arbeitet.

## Claims

1. The use of a copolymer built up from
A) from 99.5 to 75% by weight of heteroatom-containing monomers selected from monocarboxylic esters containing from 4 to 21 carbon atoms and vinyl esters, up to 35% by weight, based on the copolymer, of (meth)acrylamides, acrylonitrile, methacrylonitrile, diacetoneacrylamide, hydroxyalkyl (meth)acrylates, 2-ketobutyl (meth)acrylate, N-vinylpyrrolidone, N-vinylformamide, N-vinylcaprolactam, tetrahydrofurfuryl 2-acrylate, tetrahydrofurfuryl 2-methacrylate or tetrahydrofurfuryl 2-(meth)-acrylamide,
up to 10% by weight of monoolefinically unsaturated mono- and/or dicarboxylic acids and/or anhydrides thereof,
and if appropriate acrolein, methacrolein, acetoacetoxyethyl acrylate, vinyl methyl ether, vinyl isobutyl ether, vinylpyridine, *β*-aminoethyl vinyl ether, aminopentyl vinyl ether or tert-butylaminoethyl methacrylate, and ureido monomers and N-(meth)acryloylproline or N-acryloyl- or N-methacryloyl derivatives of amino acids or N-acryloyl and N-methacryloyl derivatives of amino acid amides,
B) from 0.5 to 25% of unsaturated compounds of the formula I 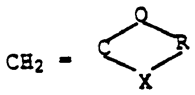 and
C) from 0 to 20% of further olefinically unsaturated monomers,
where
X is O, S or NR¹,
R is unsubstituted or substituted C₂- to C₆-alkylene, and
R¹ is C₁- to C₈-alkyl or phenyl
as contact adhesives.

2. The use of a copolymer as claimed in claim 1, wherein the copolymer contains, as component A), an acrylate and/or methacrylate of an alkanol having from 1 to 18 carbon atoms.

3. The use of a copolymer as claimed in claim 1, wherein the copolymer contains, as component A), an acrylate of a nontertiary C₄- to C₁₂-alkanol.

4. The use of a copolymer as claimed in claim 1, wherein the copolymer contains, as component A), a carboxyl-containing unsaturated compound in addition to an acrylate and/or methacrylate.

5. The use of a copolymer as claimed in claim 4, wherein the copolymer contains, as the carboxyl-containing compound, acrylic acid, methacrylic acid, maleic acid, fumaric acid or a monoester or monoamide of maleic acid or fumaric acid.

6. The use of a copolymer as claimed in claim 1, wherein the copolymer contains, as component A), N-vinylpyrrolidone in addition to an acrylate and/or methacrylate.

7. The use of a copolymer as claimed in claim 1, wherein the copolymer contains, as component B), 2-methylene-1,3-dioxepan or N-methyl-2-methyleneoxazolidine.

8. The use of a copolymer as claimed in claim 1, wherein the copolymer contains, as component C), styrene, vinyltoluene, ethene, propene, butene or butadiene.

9. The use of a copolymer as claimed in claim 1, wherein the copolymer is crosslinked by a conventional method.

10. The use of a copolymer as claimed in claim 1, wherein the components are reacted in solution in the preparation of the copolymer.

11. The use as claimed in claim 10, wherein the preparation is carried out in the absence of water or in the presence of a water-binding agent.

## Revendications

1. Utilisation de copolymères, constitués de
A) 99,5-75% en poids de monomères contenant des hétéroatomes, choisis parmi les esters vinyliques et les esters d'acides monocarboxyliques contenant de 4 à 21 atomes de carbone, jusqu'à 35% en poids, par rapport au copolymère, de (méth)acrylamides, d' acrylonitrile, de méthacrylonitrile, de diacétonacrylamide, de (méth)acrylates d'hydroxyalkyle, de (méth)acrylate de 2-cétobutyle, de N-vinylpyrrolidone, de N-vinylformamide, de N-vinylcaprolactame, de 2-acrylate de tétrahydrofurfuryle, de 2-méthacrylate de tétrahydrofurfuryle, ou de tétrahydrofurfuryl-2-(méth)-acrylamide,
jusqu'à 10% en poids d'acides mono- et/ou dicarboxyliques, monooléfiniquement insaturés et/ou leurs anhydrides et
éventuellement d'acroléine, de méthacroléine, d' acrylate d'acétoacétoxyéthyle, d'éther vinylméthylique, d'éther vinylisobutylique, de vinylpyridine, d'éther *β*-aminoéthylvinylique, d'éther aminopentylvinylique, ou de méthacrylate de tert-butylaminoéthyle, ainsi que de monomères du type uréido et de N-(méth)acryloylproline, ou de dérivés N-acryloyliques ou N-méthacryloyliques d'aminoacides, ou de dérivés N-acryloyliques et N-méthacryloyliques d'amides d'aminoacides,
B) 0,5 à 25% de composés insaturés de la formule I 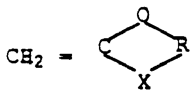 et
C) 0 à 20% d'autres monomères oléfiniquement insaturés,
où
X représente O, S ou NR¹ et
R représente un radical alkylène en C₂ à C₆ éventuellement substitué et
R¹ représente un radical phényle ou alkyle en C₁ à C₈,
à titre de colle de contact ou auto-adhésive.

2. Utilisation de copolymères suivant la revendication 1, **caractérisée en ce que** les copolymères contiennent, à titre de composants A), des esters de l'acide acrylique et/ou de l'acide méthacrylique d'alcanols comportant de 1 à 18 atomes de carbone.

3. Utilisation de copolymères suivant la revendication 1, **caractérisée en ce que** les copolymères contiennent, à titre de composantS A), des esters de l'acide acrylique d'alcanols en C₄ à C₁₂ non tertiaires.

4. Utilisation de copolymères suivant la revendication 1, **caractérisée en ce que** les copolymères contiennent, à titre de composants A), outre des esters de l'acide acrylique et/ou de l'acide méthacrylique, également des composés insaturés contenant des radicaux carboxyle.

5. Utilisation de copolymères suivant la revendication 4, **caractérisée en ce que** les copolymères contiennent, à titre de composés contenant des radicaux carboxyle, de l'acide acrylique, de l'acide méthacrylique, de l'acide maléique, de l'acide fumarique ou des monoesters ou des amides de l'acide maléique ou de l'acide fumarique.

6. Utilisation de copolymères suivant la revendication 1, **caractérisée en ce que** les copolymères contiennent, à titre de composants A), outre des esters de l'acide acrylique et/ou de l'acide méthacrylique, également de la N-vinylpyrrolidone.

7. Utilisation de copolymères suivant la revendication 1, **caractérisée en ce que** les copolymères contiennent, à titre de composant B), du 2-méthylènedioxépanne1,3 ou de la N-méthyl-2-méthylèneoxazolidine.

8. Utilisation de copolymères suivant la revendication 1, **caractérisée en ce que** les copolymères contiennent, à titre de composant C), du styrène, du vinyltoluène, de l'éthène, du propène, du butène, ou du butadiène.

9. Utilisation de copolymères suivant la revendication 1, **caractérisée en ce que** les copolymères sont réticulés suivant des méthodes habituelles.

10. Utilisation de copolymères suivant la revendication 1, **caractérisée en ce que** l'on fait réagir les composants en solution au cours de la préparation des copolymères.

11. Utilisation suivant la revendication 10, **caractérisée en ce que** l'on travaille en l'absence d'eau ou en présence d'agents liant ou fixant l'eau.
